# EUROPEAN PATENT APPLICATION

(11) **EP 1 111 505 A1**
(43) Date of publication of application: **27.06.2001**
(21) Application number: 99403225.8
(22) Date of filing: 21.12.1999
(51) Int. Cl.: G06F 9/46, H04L 29/06

(54) **Architecture for executing applications in a data communications environment**

(71) Applicant: MOTOROLA, INC., Schaumburg, IL 60196 (US)
(72) Inventor: Nerot, Sébastian, 78580 Maule (FR); Burg, Bernard Joseph, 75015 Paris (FR)
(74) Representative: Kopacz, William James

(57) **Abstract**

A service architecture for executing applications in a data communications environment comprises at least one smart card (1), a user terminal which may be a mobile telephone (2) and a server (3) all of which are linked via a common interface which comprises IIOP. The invention combines four existing standards; SIM tool kit, WAP, FIPA and CORBA. It enables any application such as E-Mail, for example to migrate and be independently executed either on a smart card, mobile handset or server. Access to the Internet can be provided by WAP layers and applications residing on a smart card can launch and run CORBA applications or agent applications which are accessed through the IIOP.

## Description

This invention relates to an architecture which allows applications such as E-Mail to be run over a set of devices such as a smart card, a mobile device (telephone, personal digital assistant), a terminal and a server.

The architecture proposed herein is modular and can run over any subset of devices. It is also generic as it relies on standard devices and can evolve towards new standards in the future.

The current wireless applications protocol (WAP) allows access to the Internet from telephones and personal digital assistants. The known SIM tool kit (subscriber identity module) enables secure transactions and applications. Agent technology or CORBA (common object request broker architecture) introduce pervasive architectures and intelligent behaviour. Each of these known technologies has its own merits but also its weaknesses. For instances, the SIM tool kit facilitates security and runs applications but is not able to subcontract tasks to a server and to enable pervasive computing. The SIM tool kit can run applications but they have to be designed especially for the SIM tool kit which is quite restrictive in size and processing power.

WAP brings the Internet to smart telephones and personal digital assistants. However, it cannot ensure security of data and the mobile terminal is restricted to visualisation through a browser. Further, WAP does not provide a solution for pervasive computing.

Agent technology or CORBA allow distribution of tasks in a computer environment. However, they rely on Internet protocol (IP) connections and use a high bandwidth. Agent technology can show intelligent, pro-active and autonomous behaviour but needs to run in a multi-threaded environment. On the other hand, neither agent technology nor CORBA are good media for the Internet especially on small devices. In addition, their security features are not strong enough to be trusted when it comes to money transactions, health data and the like.

This invention aims to provide an architecture capable of supporting the running of Applications over a variety of network devices.

Accordingly, the present invention comprises a service architecture for executing applications in a data communications environment, the architecture comprising a smart card, a user terminal and a server, all linked via a common interface comprising Internet inter-object request broker protocol (IIOP).

The user terminal may be a personal computer or a fixed or mobile telephone handset, for example.

In one embodiment, the handset is provided with a card interface and the smart card is provided with a Java™ card and a communications link therebetween is made through a virtual bi-directional bus. The handset is further provided with WAP for effecting communications with the server which is also provided with WAP.

In a further embodiment, the personal computer is provided with a card interface and the smart card is provided with a Java™ card and a communications link therebetween is made through a virtual bi-directional bus. The personal computer is further provided with an Internet protocol (IP) for effecting communications with the server which is also provided with a WAP.

The smart card may further be provided with building blocks comprising a SIM tool kit, a Java™ card data bus control (JCDBC), a structured query language (SQL).

The handset may further be provided with building blocks comprising Bluetooth, FIPA lite (Foundation for Intelligent Physical Agents), ORB lite (object request broker).

The personal computer and server may further be provided with building blocks comprising FIPA, ORB.

The invention thus proposes an architecture that combines four existing standards; SIM tool kit, WAP, FIPA, and CORBA into one single architecture which makes the link between smart cards, handsets, PC terminals and servers.

The invention has the advantages of enabling launch of any application from any device, this encompasses the means for process distribution and allows distribution of work over an architecture in order to use its resources in an optimal manner. Further, any application can be run on any device. Thus, an operation can be delegated to other devices by running the application on such other devices. Applications can be moved dynamically from one device to another and executed locally. This permits complete freedom in the deployment of applications.

This architecture runs in a transparent manner over the Internet and the wireless environment and provides a virtual bus to access a smart card. Therefore, any type of network device can communicate within this architecture.

This architecture allows running of end-to-end secure applications even in a wireless environment (which is not the case for WAP). This architecture also allows running of lightweight applications without any security. This is especially well suited for mobile terminals and smart cards. The use of security features can be determined by the application, how and when needed.

This architecture is optimal in the sense that it minimises the code to be developed as it re-uses as much as possible existing standards for devices as well as for transport layers. In addition, it is easy to interface this architecture with new emerging standards. It can also run existing standard applications, for example, in a preferred embodiment SQL, CORBA, FIPA, WAP and SIM tool kit can be used directly.

Further advantages of the architecture in accordance with the invention are the provision of an integrated set of devices working together in a transparent manner and which are accessed through services. This allows access to a database (for example accessed through SQL) and permits distribution of tasks in a computer environment and the running of programs (for example, accessed through CORBA). It can also show pro-active and intelligent behaviour agent technology (for example accessed through FIPA) and can ensure end-to-end security (for example accessed through smart cards).

All these services have to be accessible by each network device, and each device has to be able to run some of these services. The deployment of the services in the architecture can be done at run time, on demand of the user, the application or the service providers.

The architecture minimises the code to be developed and indicates which layers have to be developed between SIM tool kit, WAP, FIPA and CORBA. This common interface is realised with IIOP which is a software specified by OMG (object management group).

This architecture provides the combination of advantages of SIM tool kit, WAP, FIPA and CORBA. Any application can migrate and be independently executed, either on the smart card, mobile handset or server. When security features are an asset, the application can be secured through the SIM tool kit and provide an end-to-end solution. When an access to the Internet is important, it can be provided by the WAP layers. Similarly, an application residing on the smart card can launch and run CORBA applications or agent applications, as they can be accessed through IIOP.

The message transport in the architecture is preferably a generic ORB bus. It is transparent to the application whatever the device reached, whatever the environment. As such, the transport mechanism encompasses the three following functions; transport in the wired world (for example through TCP/IP (transmission control protocol/Internet protocol)), transport in the wireless world (for example, through WAP), transport between the smart card and the IP or WAP world (for example, by using a virtual bi-directional bus using the SIM tool kit). These transport mechanisms are interconnected and allow access to any device or service in a transparent manner.

To inter-operate, all the layers of the architecture have to use a common representation language shared by all the applications. In a preferred embodiment, the IIOP data representation (SDL) is shared in the whole architecture and allows inter-operability and modularity with many existing applications.

End-to-end security functions are optional and can be used as wished. The encryption algorithms are usually embedded in existing smart cards. As the architecture is modular, it can host new types of devices provided that a connection is made to the existing message transport mechanisms. New applications can easily be plugged in to this architecture through a common inter-connection layer described by an open standard.

Some embodiments of the invention will now be described by way of example only, with reference to the drawings of which;
Figure 1 is a schematic block diagram of an architecture in accordance with the invention for implementation in a telecommunications environment,
Figure 2 is a schematic block diagram of an architecture in accordance with the invention for implementation in an Internet environment,
And Figures 3, 4 and 5 are schematic block diagrams illustrating execution of tasks performed by the architecture of Figure 1.

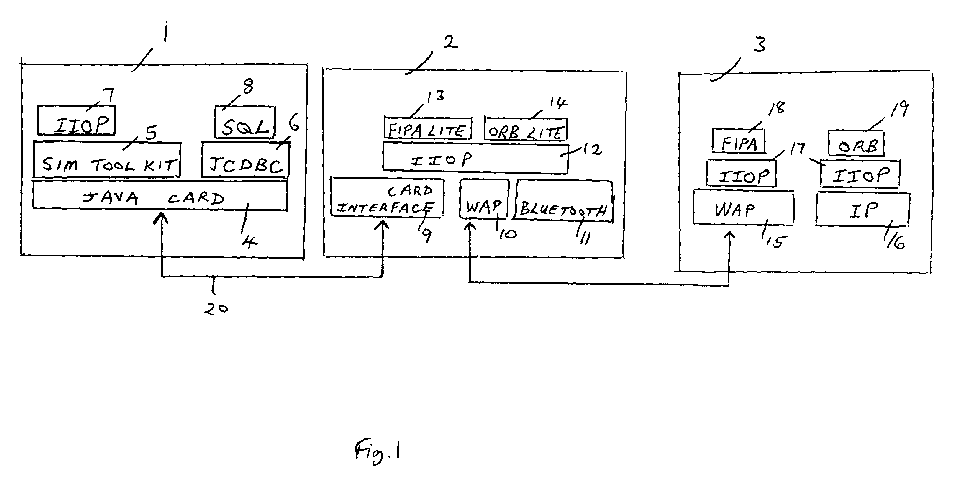

Figure 1 shows a smart card 1, a telecommunications handset 2 and a server 3 all in a telecommunications environment. The smart card 1 is provided with the following building blocks; Java™ card 4, SIM tool kit 5, a Java™ card data bus control (JCDBC) 6, IIOP 7 and SQL 8. The handset 2 is provided with the following building blocks; a card interface 9, WAP 10, Bluetooth 11 (an open specification for wireless communication of data and voice), IIOP 12, FIPA lite 13 and ORB lite 14. The server 3 is provided with the following building blocks; WAP 15, IP 16, IIOP 17, FIPA 18 and ORB 19. A communication link between the smart card 1 and the handset 2 is made through a virtual bi-directional bus 20. The communication between the handset 2 and the server 3 is realised with WAP 10, 15. The link between WAP and IP world is already realisable. On top of the transport layers at the server 3 and the mobile handset 2, there is the IIOP standard which communicates with ORB 19 and FIPA 18. On the smart card, the IIOP layer 7 allows one to build applications as well as database access.

The architecture of Figure 1 can realise a pure client-server relationship on an object bus through any telecommunications network. As such, an application can store confidential data on the smart card 1 in a secure environment. This arrangement is well suited to banking applications, for example.

IIOP is adapted to each part of the architecture. Source code of IIOP is freely available at the OMG Web site and there are several other IIOP code providers thereby ensuring inter-operation. IIOP is basically a thin layer, defining seven communication primitives. There already exists FIPA agent platforms which are available in free software and capable of running on main frames. The adaptation of a FIPA agent platform to mobile handsets called FIPA lite is the subject of the proposal for lightweight extensible agent platforms in the EEC's fifth framework. An ORB lite version of ORB give benefits of access to CORBA through the SIM tool kit. SQL and JCDBC in the smart card allow access to databases directly from the SIM tool kit. Bluetooth allows communication between terminals.

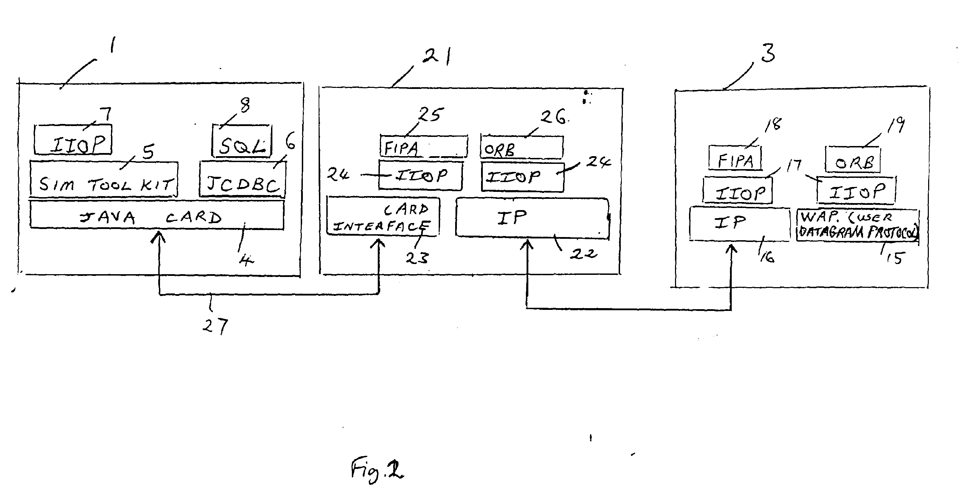

Figure 2 shows the smart card 1 and server 3 operating in an Internet environment which includes a personal computer terminal 21. The smart card 1 and server 3 include the same building blocks as the architecture of Figure 1 with a link between the server 3 and the personal computer 21 being based on IP. Thus the building blocks provided on the personal computer 21 comprise IP 22, a card interface 23, IIOP 24, FIPA 25 and ORB 26. A communication link between the smart card 1 and the personal computer 21 is made through a virtual bi-directional bus 27. Then there is a bridge between this virtual bus and IP. On top of the transport layers at the server 3 and the personal computer 21, there is the IIOP standard 17 and 21 which communicates with ORB 19 and FIPA 18. On the smart card 1, the IIOP layer 7 allows building of applications as well as database access.

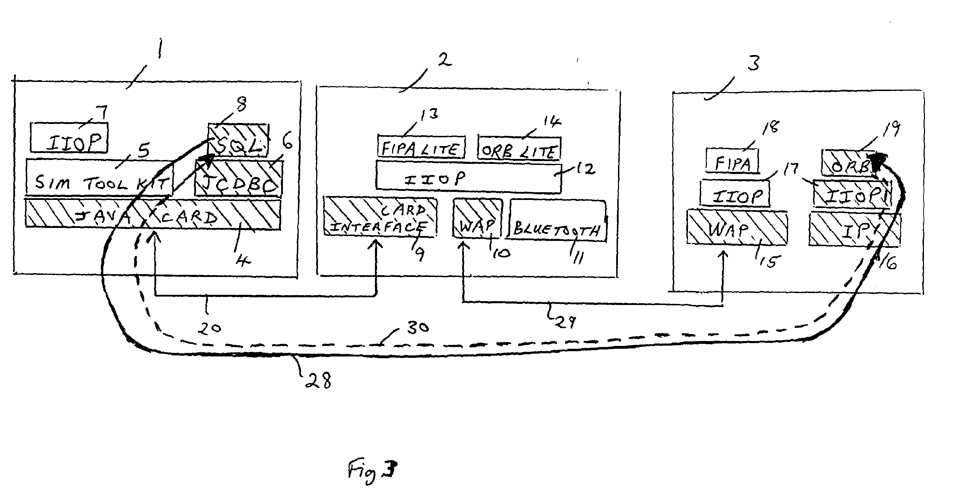

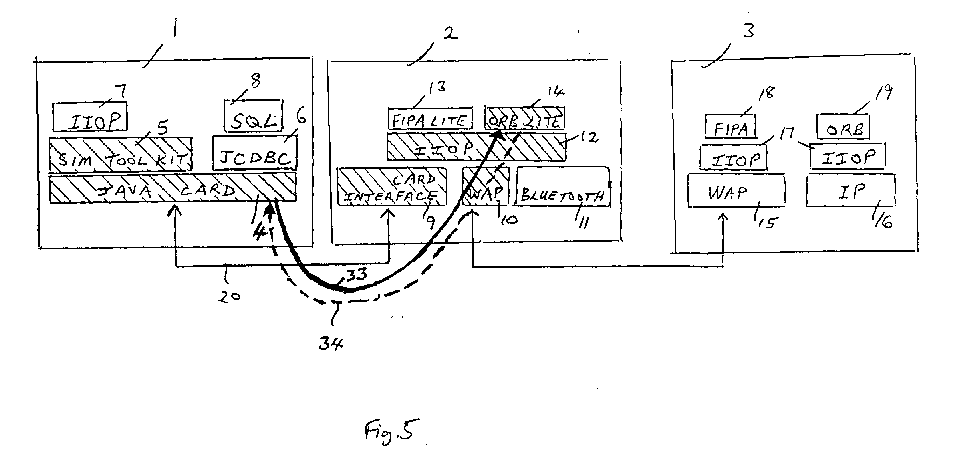

Three examples of the operation of the architecture of Figure 1 will now be described with reference to Figures 3, 4 and 5 respectively. In a first example, (Figure 3), the smart card 1 wants to perform a search in a database residing in the server 3. The operations are as follows. A request is sent from the smart card 1 to the database server. The JCDBC and SQL layers allow direct access to the database through SIM tool kit 5. Next, the request is transported by the generic ORB bus over three media, the virtual bi-directional bus 20 between the smart card 1 and the handset 2, WAP 10 via a link 29 and finally IP 16. Next, the request 28 is transmitted from IP layer 16 to the ORB 19 via the IIOP 17. Then, ORB 19 can execute the database access on the server 3. The result 30 of the database search request follows the same steps in reverse order. The active building blocks in this example appear hatched in the drawing.

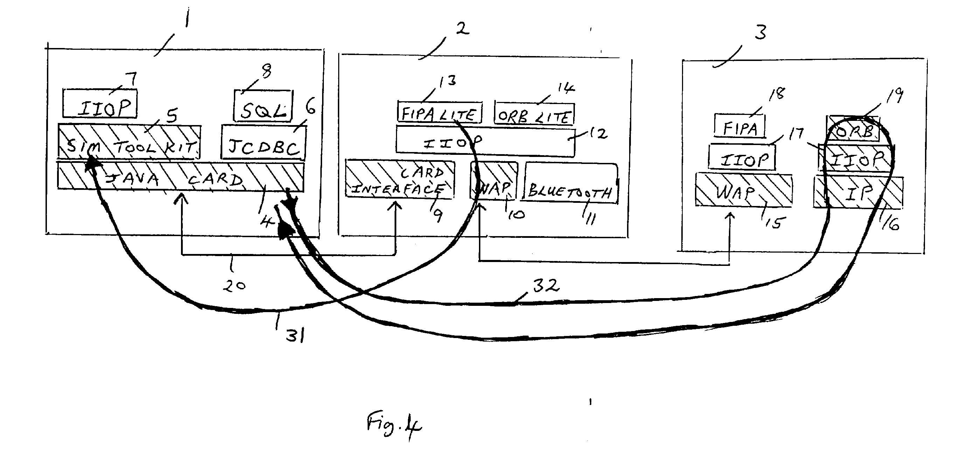

In a second example (see Figure 4), a lite agent system (FIPA lite 13) on the handset 2 evolves in an insecure environment, browsing the Internet, then finds a service the user wants to acquire. The agent starts a secure session from end-to-end between a bank and the smart card 1. Once the secure transaction is completed, the agent resumes its work. The course of actions followed in this example is as follows. Firstly, the agent sends a request 31 to the SIM tool kit for opening a secure session with the server 3 and suspends its activities.

Next, the Java™ card 4 starts a secure session by making a connection 32 to the server 3 over the virtual ORB bus. Then the secure session executes the transaction. The secure session finishes and the agent resumes This example could also work in a synchronous manner where the agent would'not suspend its activities as in the first step above. The active building blocks in this example appear hatched in the drawing.

A third example is the remote execution of a mobile code which utilises a lite agent system on the handset. Again, the active building blocks are shown hatched. The smart card 1 needs processing power to perform a computing-intensive function, say generating private keys. The smart card will transfer the execution of its own code to the handset 2 which offers processing capabilities. The sequence of action is as follows. The smart card 1 send code via a link 33 to the handset 2. The mobile handset 2 executes the code it received in the ORB environment (ORB lite 14). The results are returned via link 34 to the Java™ card 4 on the smart card 1. The scenario in this example is exactly the same if the smart card were to execute its software on the server 3. Any combinations of delegations is possible, for example the smart card 1 delegates to the handset 2 which in turn delegates to the server 3.

The above examples highlight delegations of tasks from the smart card 1 towards the server 3 looking for higher processing power. However the architecture proposed herein also allows delegating from the server 3 to the smart card 1. The practical interest of such delegations is to reduce bandwidth by performing tasks directly in a handset (which may be a mobile handset) or a smart card 1 and to avoid transmission of the data. This kind of processing distribution is also of interest for security issues.

## Claims

1. A service architecture for executing applications in a data communications environment, the architecture comprising a smart card (1), a user terminal (2) and a server (3), all linked via a common interface comprising Internet inter-object request broker protocol (IIOP) (7, 12, 17).

2. A service architecture according to Claim 1 in which the user terminal comprises a telephone handset (2).

3. A service architecture according to Claim 2 in which the telephone handset is provided with a card interface (9) and a wireless applications protocol (10).

4. A service architecture according to Claims 2 or 3 in which the telephone handset (2) further includes a lite agent system (13).

5. A service architecture according to any Claims 2 to 4 in which the telephone handset (2) further includes an object request broker (14).

6. A service architecture according to any of Claims 2 to 5 in which telephone handset (2) further includes a Bluetooth system (11).

7. A service architecture according to Claim 1 in which the user terminal comprises a personal computer (21).

8. A service architecture according to Claim 7 in which the personal computer (21) is provided with a card interface (23) and an Internet protocol (22).

9. A service architecture according to Claims 7 or 8 in which the personal computer (21) further includes an agent system (25).

10. A service architecture according to any of Claims 7 to 9 in which the personal computer (21) includes an object request broker (26).

11. A service architecture according to any preceding Claim in which the smart card (1) includes a Java™ card (4).

12. A service architecture in accordance with any preceding Claim in which the smart card (1) includes a SIM tool kit (5).

13. A service architecture according to any preceding Claim in which the smart card (1) includes a Java™ card data bus control (6).

14. A service architecture according to any preceding Claim in which the smart card (1) is provided with structured query language (SQL) (8).

15. A service architecture according to any preceding Claim in which the server (3) is provided with a wireless applications protocol (15).

16. A service architecture according to any preceding Claim in which the server (3) includes an agent system (18).

17. A service architecture according to any preceding Claim in which the server (3) includes an object request broker (19).
